# EUROPEAN PATENT APPLICATION

(11) **EP 4 660 431 A1**
(43) Date of publication of application: **10.12.2025**
(21) Application number: 25179234.7
(22) Date of filing: 27.05.2025
(51) Int. Cl.: F02C 3/08, F02C 7/36, F02C 9/20, F02K 3/06

(54) **SINGLE SPOOL GEARED TURBOFAN**

(30) Priority: 07.06.2024 US 202418737618
(71) Applicant: RTX Corporation, Farmington, CT 06032 (US)
(72) Inventor: BURD, Steven W., Cheshire, 06410 (US); STOPPELLO, Anthony K., Palm Bch Gardens, 33418 (US); PAULINO, Jose R., Jupiter, 33478 (US); MITCHELL, Ryan A., Jupiter, 33458 (US)
(74) Representative: Crowell & Moring U.K. LLP

(57) **Abstract**

A gas turbine engine may include a core. A gas turbine engine may include a nacelle at least partially surrounding the core. A gas turbine engine may include a flow bypass channel defined between an inner surface of the nacelle and an outer surface of the core. A gas turbine engine may include an axial shaft extending along a major axis of the core. A gas turbine engine may include a fan positioned at a leading end of the axial shaft. A gas turbine engine may include a reduction gear assembly coupling the fan to the axial shaft. A gas turbine engine may include a turbine directly coupled to the axial shaft and positioned downstream relative to the combustion chamber, wherein the reduction gear assembly functions to reduce rotation of the fan relative to the axial shaft.

## Description

### BACKGROUND

Gas turbine engines generally include a fan and a core arranged in flow communication with each other. In addition, the core of a gas turbine engine generally includes, in serial flow order, a compressor section, a combustion section, a turbine section, and an exhaust section. In operation, air is provided from the fan to the inlet of the compressor section, which compress the air until it reaches the combustion section. Fuel is mixed with the compressed air and combusted within the combustion section to provide combustion gases. Combustion gases are channeled from the combustion section to the turbine section. The flow of combustion gases through the turbine section drives the turbine section and is then channeled through the exhaust section, e.g., to the atmosphere.

### SUMMARY OF THE INVENTION

In some aspects, the techniques described herein relate to a gas turbine engine including: a core; a nacelle at least partially surrounding the core; a flow bypass channel defined between an inner surface of the nacelle and an outer surface of the core; an axial shaft extending along a major axis of the core; a fan positioned at a leading end of the axial shaft; a reduction gear assembly coupling the fan to the axial shaft; a compressor directly coupled to the axial shaft and positioned downstream relative to the fan; a combustion chamber defined by the core downstream from the compressor; a turbine directly coupled to the axial shaft and positioned downstream relative to the combustion chamber, wherein the reduction gear assembly functions to reduce rotation of the fan relative to the axial shaft.

In some aspects, the techniques described herein relate to a gas turbine engine including: a core; a nacelle at least partially surrounding the core; a flow bypass channel defined between an inner surface of the nacelle and an outer surface of the core; an axial shaft extending along a major axis of the core; a fan positioned at a leading end of the axial shaft; a reduction gear coupling the fan to the axial shaft, including: at least a first spur gear coupled to the axial shaft and a second spur gear is coupled to the fan, the first gear and the second gear being in mechanical communication with each other; or a epicyclic gear train. The reduction gear assembly provides a net gear ratio in a range of from about 8:1 to about 2:1; a compressor is directly coupled to the axial shaft and positioned downstream relative to the fan; a combustion chamber defined by the core downstream from the compressor; a turbine directly coupled to the axial shaft and positioned downstream relative to the combustion chamber, wherein the reduction gear functions to reduce rotation of the fan relative to the axial shaft wherien a diameter of the fan is greater than or equal to a diameter of the core.

In some aspects, the techniques described herein relate to an aerospace vehicle including a gas turbine engine, the gas turbine engine, the gas turbine engine including: a core; a nacelle at least partially surrounding the core; a flow bypass channel defined between an inner surface of the nacelle and an outer surface of the core; an axial shaft extending along a major axis of the core; a fan positioned at a leading end of the axial shaft; a reduction gear assembly coupling the fan to the axial shaft; a compressor directly coupled to the axial shaft and positioned downstream relative to the fan; a combustion chamber defined by the core downstream from the compressor; a turbine directly coupled to the axial shaft and positioned downstream relative to the combustion chamber, wherein the reduction gear assembly functions to reduce rotation of the fan relative to the axial shaft.

### BRIEF DESCRIPTION OF THE FIGURES

The drawings illustrate generally, by way of example, but not by way of limitation, various aspects of the present invention.
FIG. 1 is a sectional views of a gas turbine engine.
FIG. 2 is a sectional view another gas turbine engine
FIG. 3A is a schematic view of a reduction gear assembly including a epicyclic gear train.
FIG. 3B is a broken away view of the reduction gear assembly of FIG. 3A.
FIG. 3C is a schematic view of another reduction gear assembly including a epicyclic gear train.
FIG. 4 is a schematic view of a reduction gear assembly including a plurality of spur gears.

### DETAILED DESCRIPTION OF THE INVENTION

Reference will now be made in detail to certain aspects of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section. A comma can be used as a delimiter or digit group separator to the left or right of a decimal mark; for example, "0.000,1" is equivalent to "0.0001." All publications, patents, and patent documents referred to in this document are incorporated by reference herein in their entirety, as though individually incorporated by reference. In the event of inconsistent usages between this document and those documents so incorporated by reference, the usage in the incorporated reference should be considered supplementary to that of this document; for irreconcilable inconsistencies, the usage in this document controls.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than or equal to about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

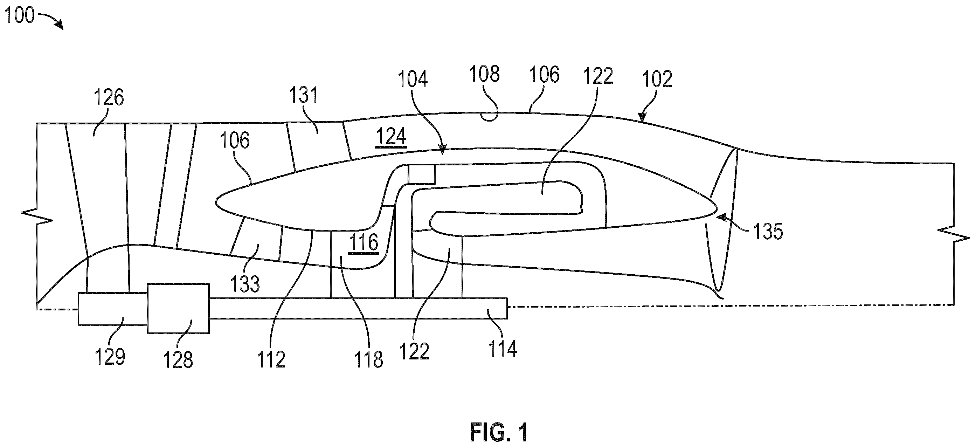

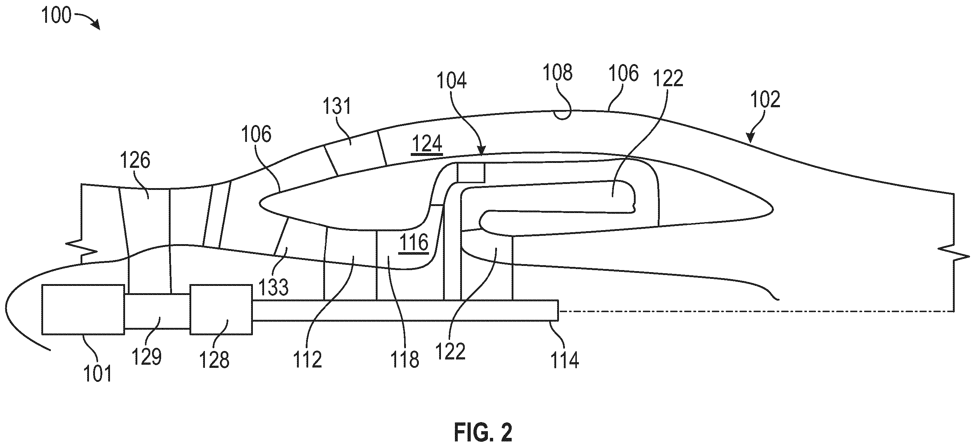

FIGS. 1 and 2 are sectional views of gas turbine engine 100. FIGS. 1 and 2 show many of the same components and are discussed concurrently Gas turbine engine 100 is a single-spool turbofan engine. As shown in FIGS. 1 and 2, gas turbine engine 100 includes nacelle 102 and core 104. Nacelle 102 includes outer surface 106 and inner surface 108. Core 104 includes outer surface 110 and inner surface 112. Core 104 further includes axial shaft 114, inner flow channel 116, compressor stage 118, combustion chamber 120, and turbine stage 122. Bypass flow channel 124 is defined between nacelle inner surface 108 and core outer surface 110. Gas turbine engine 100 further includes fan 126, reduction gear assembly 128, and fan shaft 129. Gas turbine engine 100, further includes vane 131.Fan 126 is located at a leading end of axial shaft 114 and is at least partially surrounded by nacelle 102. Fan 126 is coupled to axial shaft 114 by reduction gear assambly128 which is coupled to fan shaft 129. In some examples, as shown in FIG. 2, generator or motor 101 can be coupled to fan shaft 129 to produce mechanical to electrical power conversion or a motor or starter to input power into fan shaft 129 in order to provide rotation assist to gas turbine engine 100.

The "leading end" of axial shaft 114 is relative to air flow through gas turbine engine 100. Fan 126 is joined to axial shaft 114 through reduction gear assembly 128. Core 104 is positioned downstream of fan 126 along axial shaft 114. Within core 104, compressor stage 118 is positioned in flow communication with fan 126 and is directly connected to axial shaft 114. Combustion chamber 120 is located downstream of compressor stage 118 along axial shaft 114. Turbine stage 122 is located downstream of combustion chamber 120 along axial shaft 114. Core 104 is circumferentially bounded by nacelle 102.

In operation, gas turbine engine 100 draws in a large volume of air through fan 126. A portion of this air is bypassed around the engine core, contributing directly to thrust. Fan 126 is a large-diameter propeller with multiple blades. It is responsible for drawing air into the engine and a portion of this air bypasses core 104, through bypass flow channel 124 to provide thrust directly, contributing to gas turbine engine 100's efficiency and noise reduction. Fan126 may have struts or an inlet structure for support.

Vane 131 is attached to nacelle 102 and core 104. Vane 131 provides structural support but also can control the air flow through bypass flow channel 124. In some examples, vane 131 can be movable or actuated to allow for some control of the flow of air through bypass flow channel 124. Vane 133 is positioned in inner flow channel 116, and can control the flow therethrough. In some examples, vane 133 can be movable or actuated to allow for some control of the flow of air through inner flow channel 116.

Individual blades of fan 126 can be formed from titanium alloys, aluminum, or composite materials, as examples. Titanium alloys can be desirable due to their high strength-to-weight ratio, excellent corrosion resistance, and ability to retain strength at moderate temperatures. Composite materials, such as carbon fiber-reinforced polymers can also be used. Composite materials can lead to significant weight savings and improved efficiency.

Air that does not pass though bypass flow channel 124 is drawn to inner flow channel 116 through compressor stage 118. Compressor stage 118 can be a single stage of radially extending blades or one or more stages axially spaced with respect to each other and each stage having of smaller diameter (measured radially) blades than those of an upstream stage. Compressor stage 118 functions to compress air to prepare it for combustion. Compressor stage can be a centrifugal, radial, or diagonal type of compressor.

Individual blades of compressor stage 118 can include titanium alloys or nickel-based super alloys, as examples. Nickel based super alloys capable of maintaining high strength and stiffness at elevated temperatures. Compressor stage 118 can also include an impeller compressor, a radial-type compressor, a centrifugal compressor or a diagonal compressor.

Compressed air flows from compressor stage 118 to combustion chamber 120. Combustion chamber 120 is where the compressed air mixes with fuel and is ignited. The combustion process significantly increases the temperature and volume of the air. The high-pressure and high-temperature gases generated from combustion then expand and move to turbine stage 122.

Combustion chamber 120 is made at least in part of a high-performance material. This is because the combustion chamber is subjected to the highest temperatures and corrosive conditions. Nickel-based superalloys, which are highly resistant to thermal creep deformation, oxidation, and corrosion at high temperatures, are suitable for use. Additionally the nickel-based superalloy can be coated with ceramic materials to improve their heat resistance and to protect them from the harsh combustion environment. Combustion chamber can be fabricated or formed by additive manufacturing.

Turbine stage 122 can be a single stage of radially extending blades or one or more stages axially spaced with respect to each other and each stage having of larger diameter (measured radially) blades than those of an upstream stage. Turbine stage 122 can be a radial turbine, axial turbine, or a combination thereof. The hot, high-pressure gases entering turbine stage 122 from combustion then enter turbine stage 122, causing it to spin. Finally, the gases exit through the exhaust, providing additional thrust.

Similar to the individual blades of compressor stage 118, and the materials of combustion chamber 120, individual blades of turbine stage 122 are also made from nickel-based superalloys. The individual blades can be forgings, castings, or formed by additive manufacturing. These materials can withstand the extreme temperatures and stresses found in the turbine section of the engine. For some examples, ceramic matrix composites can be used to form individual blades of turbine stage 122. Ceramic matrix composites can be desirable due to their comparatively lighter weight and higher temperature capabilities as compared to metal alloys. In some examples, the individual turbine blades (or wheels in a rotary turbine) can be coated with thermal barrier coatings. These coatings can be made from ceramics such as yttria-stabilized zirconia (YSZ), which provides thermal insulation from the hot gases passing over the blades. While compressor stage 118 and turbine stage 122 are shown to include individual blades, either stage can be configured as a impeller, radial, or centrifugal compressor or turbine. Turbine stage 122 can be a radial turbine.

Flow from bypass flow channel 124 and inner flow channel 116 combine downstream of turbine stage 122. Gas turbine engine 100 can be equipped with exhaust mixer 135 to evenly combine the exhaust. Thrust can also be derived from the exhaust by including any of a bypass flow augmenter or ramburner, a core flow augmenter or ramburner, or a full exhaust augmenter or ramburner.

Rotation of turbine stage drives rotation of compressor stage 118 and fan 126. Turbine stage 122, compressor stage 118, and Fan 126 are all joined to axial shaft 114. Although compressor stage 118 spins at a rate equivalent to that of turbine stage 122, fan 126 spins at a slower rate than either compressor stage 118 and turbine stage 122. This is because of reduction gear assembly 128.

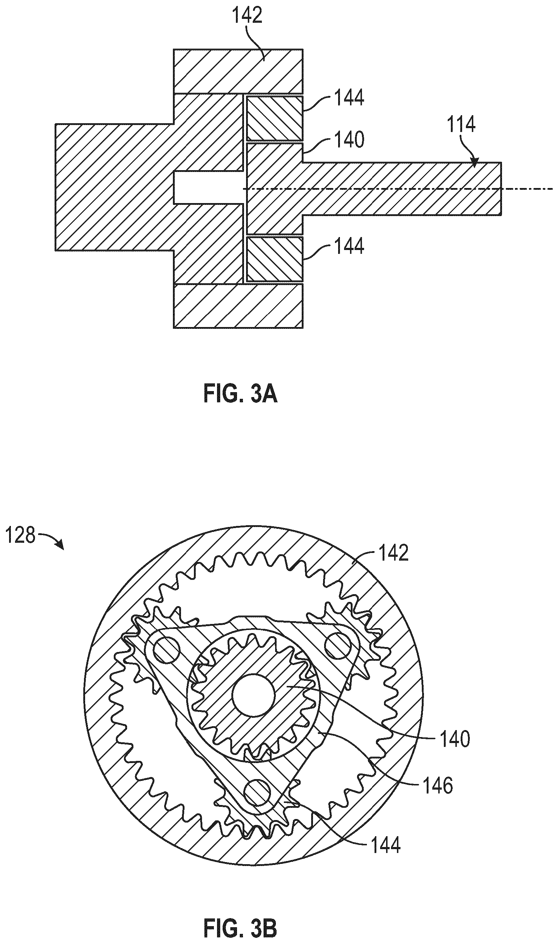

FIG. 3A is a schematic view of reduction gear assembly 128 showing reduction gear assembly 128 as a epicyclic gear train. FIG. 3B is a broken away view of reduction gear assembly 128. As shown axial shaft 114 includes sun gear 140, fan shaft 129 includes ring gear 142. Planetary gears 144 interface with sun gear 140 and ring gear 142. Planetary gears 144 are held by planetary carrier 146.

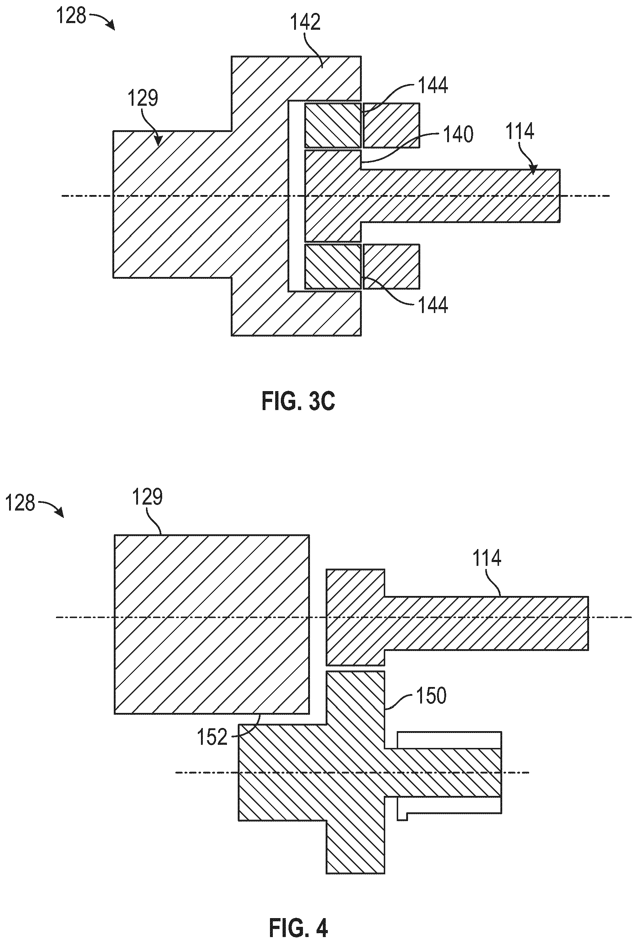

Sun gear 140, which is centrally located, controls the output speed of reduction gear assembly 128. Because sun gear 140 is attached to an axial shaft 114, which spins at a high speed, it drives surrounding planetary gears 144, which are mounted on planetary carrier 146. Planetary gears 144, in turn, engage with ring gear 142, which connected to fan 126 by fan shaft 129. As the axial shaft 114 rotates sun gear 140, planetary gears 144 orbit around it while also spinning on their own axes. This dual motion of planetary gears 144-both orbiting sun gear 140 and rotating against ring gear 142-results in a reduction of the rotational speed transmitted to planetary carrier 146. Consequently, planetary carrier 146, which is ultimately connected to fan 126, rotates at a slower rate than axial shaft 114. Alternatively, as shown in FIG. 3C, ring gear 142 is fixed and fan shaft 129 is connected to planetary carrier 146. Planetary carrier rotates and results int eh reduction or rotational speed of fan shaft 129.

Alternatively, as shown in FIG. 4, which is a schematic view of reduction gear assembly 128, it can include a plurality of spur gears, at least first spur gear 150, which is coupled to the axial shaft 114 and mounted to bearing 151. Reduction gear assembly 128 further includes second spur gear 152, which is coupled to fan shaft 129. First spur gear 150 and second spur gear 152 are in mechanical communication with each other. Specifically, the teeth of the first gear and second gear are able to interact with each other. A net gear ratio achieved by the reduction gear assembly is in a range of from about 8:1 to about 2:1, about 6:1 to about 2:1.

Reduction gear assembly 128 can include spur gears, which are a type of cylindrical gear with teeth that are straight and parallel to the axis of rotation. They are designed to transmit motion and power between parallel shafts. The teeth of a spur gear are straight and project radially, and their edges are parallel to the axis of the gear. This design makes them straightforward to manufacture and allows for smooth meshing with other gears. The pitch surface of spur gears is cylindrical, and the teeth are cut along the surface at precise intervals to ensure uniform motion transfer.

Reduction gear assembly 128 allows for fan 126 to spin at its optimal, or at least substantially optimal speed. Typically the rotation of turbine stage 122 can be at high speeds and those speeds are not ideal for a fan 126's efficiency and/or performance. That is if fan 126 is spinning at the same high rate as turbine stage 122, fan 126 is moving too fast to effectively drive air through bypass flow channel 124. However, lowering the speed of fan 126 with reduction gear assembly can result in gas turbine engine 100 having a desired bypass ratio in a range of from about 0.5 to about 5, about 0.5 to about 3, or about 1 to about 1. Additionally, lowering the speed of fan 126 can result in noise reduction and fuel efficiency gains in gas turbine engine 100. Typically reduction gear assembly 128 can reduce rotation of fan 126, relative to axial shaft 114 by about 20% to about 60%, about 25% to about 55%, about 30% to about 50% or about 35% to about 45%.

The lower speed of fan 126 can also allow for the use of lower performance materials used to construct fan 126. Without fan 126 having to be subjected to the stresses associated with supersonic rotation speeds, the blade material does not necessarily have to be made of expensive titanium alloys or ceramics. Indeed in some examples, the blades of fan 126 can be formed from an additive manufacturing protocol where the possible drawbacks of additive manufacturing (e.g., low density products) are mitigated.

Single-spool gas turbine engines are known to have various advantages relative to twin-spool or other multi-stage gas turbine engines. For example, single spool engines have fewer moving parts because they consist of only one shaft connecting the fan, compressor, and turbine. This simplicity leads to easier maintenance and potentially lower manufacturing costs. Additionally, The simpler design and construction translate into lower initial costs and maintenance expenses. Moreover, having fewer components generally means a lighter engine overall. Additionally, the design can allow for improved performance and better fuel consumption relative to a single-spool gas turbine engine lacking a fan and reduction gear assembly. Thus, adding fan 126 and a reduction gear assembly 128 can enhance these advantages by allowing for the effective use of fan 126 to produce a bypass ratio as mentioned above.

Gas turbine engine 100 can be used in many different applications where a single-spool gas turbine engine is applied. For example, gas turbine engine 100 can be used in light combat aircraft. Gas turbine engine 100 can also be used to power an unmanned aerial vehicle. Gas turbine engine 100 can also be used to power a cruise missile.

In some examples, an axial length of gas turbine engine 100 is in a range of from about 40 cm to about 100 cm, about 55 cm to about 95 cm, about 60 cm to about 90 cm, about 70 cm to about 85 cm, or about 55 cm to about 75 cm. In some examples a diameter (measured radially) of gas turbine engine can be in a range of from about 10 cm to about 60 cm, about 15 cm to about 35 cm, or about 20 cm to about 30 cm. As shown in FIG. 1 a radius (and therefore diameter) of fan 126 is greater than a radius (and therefore diameter) of core 104. Alternatively as shown in FIG. 2 a radius (and therefore diameter) of fan 126 is less than a radius (and therefore diameter) of core 104. This can allow for different design choices to have air flow controlled for desired applications.

### Exemplary Aspects.

The following exemplary aspects are provided, the numbering of which is not to be construed as designating levels of importance:
Aspect 1 provides a gas turbine engine comprising:
   a core;
   a nacelle at least partially surrounding the core;
   a flow bypass channel defined between an inner surface of the nacelle and an outer surface of the core;
   an axial shaft extending along a major axis of the core;
   a fan positioned at a leading end of the axial shaft;
   a reduction gear assembly coupling the fan to the axial shaft;
   a compressor directly coupled to the axial shaft and positioned downstream relative to the fan;
   a combustion chamber defined by the core downstream from the compressor;
   a turbine directly coupled to the axial shaft and positioned downstream relative to the combustion chamber,
   wherein the reduction gear assembly functions to reduce rotation of the fan relative to the axial shaft.
Aspect 2 provides the gas turbine engine of Aspect 1, wherein reduction gear assembly comprises a gearbox.
Aspect 3 provides the gas turbine engine of Aspect 2, wherein reduction gear assembly provides a net gear ratio in a range of from about 8:1 to about 2: 1.
Aspect 4 provides the gas turbine engine of any of Aspects 2 or 3, wherein the gearbox comprises a plurality of spur gears, wherein at least a first spur gear is coupled to the axial shaft and a second spur gear is coupled to the fan, the first gear and the second gear being in mechanical communication with each other.
Aspect 5 provides the gas turbine engine of any of Aspects 1-4, wherein the reduction gear assembly comprises a epicyclic gear train.
Aspect 6 provides the gas turbine engine of any of Aspects 1-4, wherein a bypass ratio of air in the flow bypass channel to the core is in a range of from about 0.5 to about 5.
Aspect 7 provides the gas turbine engine of any of Aspects 1-6, wherein a bypass ratio of air in the flow bypass channel to the core is in a range of from about 0.5 to about 3.
Aspect 8 provides the gas turbine engine of any of Aspects 1-7, wherein the compressor comprises an impeller compressor, a radial-type compressor, a centrifugal compressor or a diagonal compressor.
Aspect 9 provides the gas turbine engine of any of Aspects 1-8, wherein the turbine is a radial turbine.
Aspect 10 provides the gas turbine engine of any of Aspects 1-9, wherien a diameter of the fan is greater than or equal to a diameter of the core.
Aspect 11 provides a gas turbine engine comprising:
   a core;
   a nacelle at least partially surrounding the core;
   a flow bypass channel defined between an inner surface of the nacelle and an outer surface of the core;
   an axial shaft extending along a major axis of the core;
   a fan positioned at a leading end of the axial shaft;
   a reduction gear coupling the fan to the axial shaft, comprising:
      at least a first spur gear coupled to the axial shaft and a second spur gear is coupled to the fan, the first gear and the second gear being in mechanical communication with each other and a gear ratio of the first spur gear to the second spur gear is in a range of from about 8:1 to about 2:1; or
      a epicyclic gear train;
   a compressor directly coupled to the axial shaft and positioned downstream relative to the fan;
   a combustion chamber defined by the core downstream from the compressor;
   a turbine directly coupled to the axial shaft and positioned downstream relative to the combustion chamber,
   wherein the reduction gear functions to reduce rotation of the fan relative to the axial shaft
   wherien a diameter of the fan is greater than or equal to a diameter of the core.
Aspect 12 provides the gas turbine engine of Aspect 11, wherein reduction gear assembly provides a net gear ration in a range of from about 8:1 to about 2:1.
Aspect 13 provides the gas turbine engine of Aspect 12, wherein a bypass ratio of air in the flow bypass channel to the core is in a range of from about 0.5 to about 5.
Aspect 14 provides the gas turbine engine of any of Aspects 11-13, wherein a bypass ratio of air in the flow bypass channel to the core is in a range of from about 0.5 to about 3.
Aspect 15 provides the gas turbine engine of any of Aspects 11-14, wherein the comprises an impeller compressor, a radial-type compressor, a centrifugal compressor or a diagonal compressor and the turbine is a radial turbine.
Aspect 16 provides the gas turbine engine of any of Aspects 11-15, further comprising at least one of a vane joining the nacelle and the core and a vane disposed in the core, wherein either vane can be movable or actuatable to manipulate the flow from the bypass flow channel, air from an inner flow channel or both.
Aspect 17 provides a gas turbine engine comprising:
   a core;
   a nacelle at least partially surrounding the core;
   a flow bypass channel defined between an inner surface of the nacelle and an outer surface of the core;
   an axial shaft extending along a major axis of the core;
   a fan positioned at a leading end of the axial shaft;
   a reduction gear assembly coupling the fan to the axial shaft;
   a compressor directly coupled to the axial shaft and positioned downstream relative to the fan;
   a combustion chamber defined by the core downstream from the compressor;
   a turbine directly coupled to the axial shaft and positioned downstream relative to the combustion chamber; and
   at least one of a motor, generator, or starter-generated attached to the axial shaft proximate to the leading end of the axial shaft,
   wherein the reduction gear assembly functions to reduce rotation of the fan relative to the axial shaft.
Aspect 18 provides the aerospace vehicle of Aspect 17, wherien a diameter of the fan is greater than or equal to a diameter of the core.
Aspect 19 provides the aerospace vehicle of any of Aspects 17 or 18, wherein the reduction gear assembly of the gas turbine engine comprises a plurality of spur gears or an epicyclic gear train.
Aspect 20 provides the aerospace vehicle of any of Aspects 17-19, wherein a bypass ratio of air in the flow bypass channel to the core is in a range of from about 0.5 to about 5.

## Claims

1. A gas turbine engine comprising:
a core;
a nacelle at least partially surrounding the core;
a flow bypass channel defined between an inner surface of the nacelle and an outer surface of the core;
an axial shaft extending along a major axis of the core;
a fan positioned at a leading end of the axial shaft;
a reduction gear assembly coupling the fan to the axial shaft;
a compressor directly coupled to the axial shaft and positioned downstream relative to the fan;
a combustion chamber defined by the core downstream from the compressor;
a turbine directly coupled to the axial shaft and positioned downstream relative to the combustion chamber,
wherein the reduction gear assembly functions to reduce rotation of the fan relative to the axial shaft.

2. The gas turbine engine of claim 1, wherein the reduction gear assembly comprises a gearbox.

3. The gas turbine engine of claim 2, wherein the gearbox comprises a plurality of spur gears, wherein at least a first spur gear is coupled to the axial shaft and a second spur gear is coupled to the fan, the first gear and the second gear being in mechanical communication with each other.

4. The gas turbine engine of any preceding claim, wherein the reduction gear assembly comprises a epicyclic gear train.

5. The gas turbine engine of any preceding claim, wherein the compressor comprises an impeller compressor, a radial-type compressor, a centrifugal compressor or a diagonal compressor.

6. The gas turbine engine of any preceding claim, wherein the turbine is a radial turbine.

7. A gas turbine engine comprising:
a core;
a nacelle at least partially surrounding the core;
a flow bypass channel defined between an inner surface of the nacelle and an outer surface of the core;
an axial shaft extending along a major axis of the core;
a fan positioned at a leading end of the axial shaft;
a reduction gear assembly coupling the fan to the axial shaft, comprising:
at least a first spur gear coupled to the axial shaft and a second spur gear is coupled to the fan, the first gear and the second gear being in mechanical communication with each other and a gear ratio of the first spur gear to the second spur gear is in a range of from about 8:1 to about 2:1; or
a epicyclic gear train;
a compressor directly coupled to the axial shaft and positioned downstream relative to the fan;
a combustion chamber defined by the core downstream from the compressor;
a turbine directly coupled to the axial shaft and positioned downstream relative to the combustion chamber,
wherein the reduction gear functions to reduce rotation of the fan relative to the axial shaft
wherien a diameter of the fan is greater than or equal to a diameter of the core.

8. The gas turbine engine of any preceding claim, wherein the reduction gear assembly provides a net gear ratio in a range of from about 8:1 to about 2:1.

9. The gas turbine engine of any preceding claim, wherein a bypass ratio of air in the flow bypass channel to the core is in a range of from about 0.5 to about 5; or
wherein a bypass ratio of air in the flow bypass channel to the core is in a range of from about 0.5 to about 3.

10. The gas turbine engine of claim 7, wherein the compressor comprises an impeller compressor, a radial-type compressor, a centrifugal compressor or a diagonal compressor and the turbine is a radial turbine.

11. The gas turbine engine of claim 7 or claim 10, further comprising at least one of a vane joining the nacelle and the core and a vane disposed in the core, wherein either vane can be movable or actuatable to manipulate the flow from the bypass flow channel, air from an inner flow channel or both.

12. A gas turbine engine comprising:
a core;
a nacelle at least partially surrounding the core;
a flow bypass channel defined between an inner surface of the nacelle and an outer surface of the core;
an axial shaft extending along a major axis of the core;
a fan positioned at a leading end of the axial shaft;
a reduction gear assembly coupling the fan to the axial shaft;
a compressor directly coupled to the axial shaft and positioned downstream relative to the fan;
a combustion chamber defined by the core downstream from the compressor;
a turbine directly coupled to the axial shaft and positioned downstream relative to the combustion chamber; and
at least one of a motor, generator, or starter-generated attached to the axial shaft proximate to the leading end of the axial shaft,
wherein the reduction gear assembly functions to reduce rotation of the fan relative to the axial shaft.

13. The gas turbine engine of any one of claims 1 to 6 or 12, wherein a diameter of the fan is greater than or equal to a diameter of the core.

14. The gas turbine engine of claim 12, wherein the reduction gear assembly of the gas turbine engine comprises a plurality of spur gears or an epicyclic gear train.

15. The gas turbine engine of claim 12 or claim 14, wherein a bypass ratio of air in the flow bypass channel to the core is in a range of from about 0.5 to about 5.
